Europäisches Patentamt

European Patent Office

Office européen des brevets

(19)

(11) Veröffentlichungsnummer: **0 200 907**
**B1**

(12) **EUROPÄISCHE PATENTSCHRIFT**

(45) Veröffentlichungstag der Patentschrift: **06.06.90**

(51) Int. Cl.⁵: **B 60 Q 1/00**

(21) Anmeldenummer: **86104229.9**

(22) Anmeldetag: **27.03.86**

(54) Scheinwerfer-Blinkleuchten-Einheit für Personenkraftfahrzeuge.

(30) Priorität: **09.05.85 DE 3516711**

(43) Veröffentlichungstag der Anmeldung:
**12.11.86 Patentblatt 86/46**

(45) Bekanntmachung des Hinweises auf die
Patenterteilung:
**06.06.90 Patentblatt 90/23**

(84) Benannte Vertragsstaaten:
**DE FR GB IT**

(56) Entgegenhaltungen:
**DE-B-2 656 755**
**DE-U-7 616 812**
**FR-A-2 314 843**

(73) Patentinhaber: **ROBERT BOSCH GMBH**
**Postfach 50**
**D-7000 Stuttgart 1 (DE)**

(72) Erfinder: **Haug, Kurt**
**Ganghoferstrasse 43**
**D-7410 Reutlingen (DE)**
Erfinder: **Peterssen, Rudolf, Ing.(grad.)**
**Bachstrasse 13**
**D-7408 Kusterdingen (DE)**

EP 0 200 907 B1

Courier Press, Leamington Spa, England.

## Beschreibung

### Stand der Technik

Die Erfindung betrifft eine Scheinwerfer-Blinkleuchten-Einheit für Personenkraftfahrzeuge nach der Gattung des Anspruchs 1. Eine derartige Einheit ist beispielsweise aus der DE-OS 26 56 755 bekannt. Dort wird die Blinkleuchte mittels der Elemente zum einen an den benachbarten Scheinwerfer angelehnt und zum anderen an den Radkasten der Karosserie federelastisch gedrückt. Hierbei ist es nicht auszuschließen, daß der seitliche Außenabschnitt der Blinkleuchte vom Radkasten abhebbar ist und seine ursprüngliche Funktionslage nicht mehr einnimmt, so daß das Blinksignal nicht in der vorgegebenen Richtung ausgestrahlt wird.

Eine ähnliche Scheinwerfer-Blinkleuchten-Einheit ist auch durch die DE-U-76 16 812 bekannt. Dort ist die Blinkleuchte nur einseitig am Scheinwerfer befestigt. Ein Federelement stützt sich dabei am Tragrahmen des Scheinwerfers ab und drückt dabei die Leuchte in Richtung zur Streuscheibe des Scheinwerfers hin. Auch wird die Blinkleuchte nur federelastisch gegen die Karosserie gedrückt mit gleichen Nachteilen wie zum obigem Stand der Technik beschrieben.

### Vorteile der Erfindung

Ausgehend von einer Scheinwerfer-Blinkleuchten-Einheit nach der Gattung des Anspruchs 1 wird das im vorerwähnten Stand der Technik dargelegte Problem mit dem kennzeichnenden Merkmal des Anspruchs 1 gelöst. Der Erfindung liegt der Gedanke zugrunde, im kritischen Bereich des seitlichen Außenabschnittes der Blinkleuchte zusätzliche eine Federkraft zur kraftschlüssigen und damit spielfreien Positionierung der Blinkleuchte anzuordnen.

Vorteilhafte Weiterbildungen der Erfindung sind durch die Unteransprüche gegeben. Mit Anspruch 2 wird ein Federorgan aufgezeigt, das eine verhältnismäßig große Federkraft bei genügendem Federweg aufweist. Mit Anspruch 6 wird ein technisch einfacher Weg gewiesen, um die Blinkleuchte in den drei Richtungen dem Scheinwerfer zuzuordnen. Diese Zuordnung wird mit Anspruch 7 und/oder mit Anspruch 8 beachtlich erhöht. Mit Anspruch 9 wird auch bei maximalem Federweg des Federorgans noch eine Linienberührung des Federhakens mit dem Scheinwerfergehäuse erreicht.

### Zeichnung

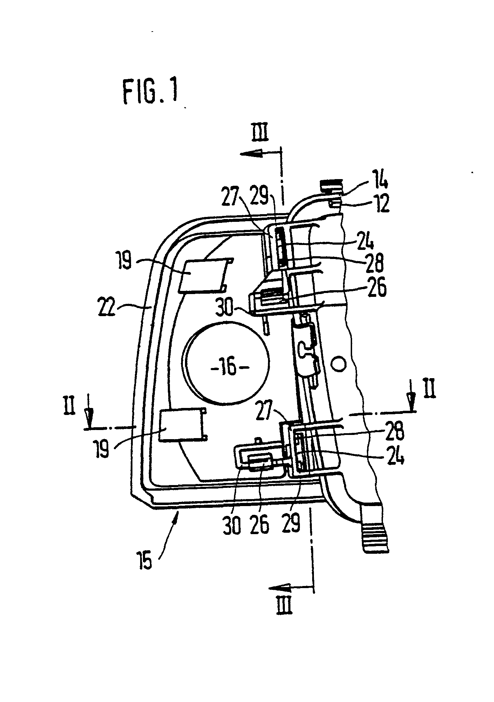

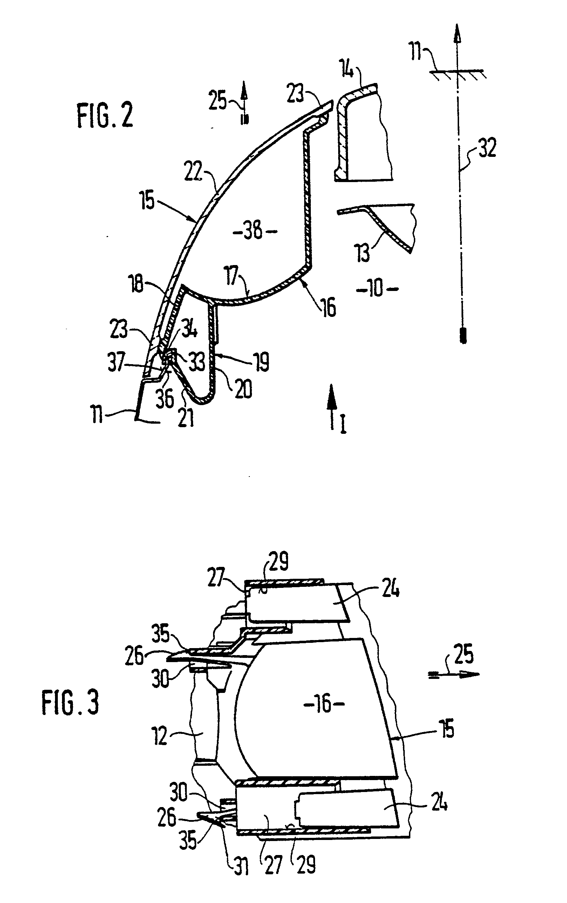

Ein Ausführungsbeispiel der Erfindung ist in der Zeichnung dargestellt und in der Figurenbeschreibung näher erläutert. Es zeigen jeweils abschnittsweise und in verkleinerter Darstellung: Figur 1 eine Rückansicht der am Scheinwerfergehäuse befestigten Blinkleuchte gemäß Blickrichtung I in Figur 2; Figur 2 einen Horizontalschnitt gemäß Schnitt II-II in Figur 1; und Figur 3 einen Vertikalschnitt gemäß Schnitt III-III in Figur 1.

### Beschreibung des Ausführungsbeispieles

Eine Scheinwerfer-Blinkleuchten-Einheit für Personenkraftfahrzeuge gemäß den Figuren 1 bis 3 ist in einer Mulde 10 der Fahrzeugkarosserie 11 angeordnet, an der ein Scheinwerfergehäuse 12 befestigt ist. Dieses stützt einen Scheinwerferreflektor 13 und eine Streuscheibe 14.

Eine den Innenraum 38 der Blinkleuchte 15 verschließende Lichtscheibe 22 ist mit einem umlaufenden Rand 23 des Leuchtengehäuses 16 verschweißt.

Die Blinkleuchte 15 hat ein Leuchtengehäuse 16 aus Kunststoff mit einem Leuchtenreflektor 17, an dem sich ein seitlicher Außenabschnitt als Lappen 18 fortsetzt. Eine als Federorgan wirkende gekrümmte Blattfeder 19 ist mit ihrem einen Schenkel 20 an der Rückseite des Leuchtengehäuses 16 angeformt und ihr zweiter, als Federzunge wirkender Schenkel 21 ist seitlich nach außen gerichtet und stützt sich über ein Dichtstück 34 an der seitlichen Innenseite 36 der Karosserie 11 ab. Das Dichtstück 34 ist auf einer Kante 33 der Karosserie 11 aufgesteckt.

Am Leuchtengehäuse 16 sind parallel zur Fahrzeug-Längsachse 32 jeweils annähernd übereinander angeordnet zum einen zwei horizontal wirkende Federarme 24 und zum andern zwei vertikal wirkende Federhaken 26 mit je einer in horizontaler Richtung balligen Stützfläche 31. Vom Scheinwerfergehäuse 12 stehen parallel zur Längsachse 32 und entgegen Fahrtrichtung Pfeil 25 ab zum einen zwei Taschen 27 mit je einer Schulter 28 und einer Gleitfläche 29 und zum andern zwei Taschen 30 mit je einer Kante 35.

Die Scheinwerfer-Blinkleuchten-Einheit für Personenkraftfahrzeuge wird wie folgt zusammengebaut und danach an der Karosserie 11 befestigt: Die Blinkleuchte 15 wird entgegen Fahrtrichtung 25 und parallel zur Längsachse 32 an das Scheinwerfergehäuse 12 derart eingeschoben, daß jeder Federarm 24 durch Anliegen an der Schulter 28 die seitliche Zuordnung und durch Anliegen an der Gleitfläche 29 die vertikale Zuordnung beider Gehäuse 12 und 16 bewirkt. Am Ende des Einschiebevorganges lehnt sich das Leuchtengehäuse 16 am Scheinwerfergehäuse 12 in nicht dargestellter Weise an und die Stützfläche 31 des Federhakens 26 hintergreift die Kante 35 der Tasche 30, wodurch die Funktionslage der Blinkleuchte 15 in Fahrtrichtung 25 gesichert ist.

Der freie Schenkel 21 der beiden Blattfedern 19 stützt sich dabei über das Dichtstück 34 an der Innenseite 36 der Karosserie 11 und drückt dabei den Lappen 18 des Leuchtengehäuses 16 an die Außenseite 37 der Karosserie 11 an; hierdurch ist ein Abheben des seitlichen Außenabschnittes 18 der Blinkleuchte 15 verhindert.

### Patentansprüche

1. Scheinwerfer-Blinkleuchten-Einheit für Personenkraftfahrzeuge mit einem Scheinwerfergehäuse, das in einer Mulde der Kraftfahrzeugkarosserie angeordnet und an dieser befestigt ist, und mit einem Leuchtengehäuse, das parallel zur Fahrzeug-Längsachse an das Scheinwerfergehäuse einschiebbar ist und an diesem mittels Elementen in seiner Funktionslage befestigt ist, dadurch gekennzeichnet, daß das Leuchtengehäuse (16) an der dem Scheinwerfer abgewandten Seite mindestens ein Federorgan (19) aufweist und das Leuchtengehäuse dem Federorgan gegenüberliegend einen seitlichen Außenabschnitt (18) aufweist, zwischen dem und dem Federorgan ein Rand (33) der Fahrzeugkarosserie einspannbar ist.

2. Einheit nach Anspruch 1, dessen Leuchtengehäuse aus Kunststoff besteht, dadurch gekennzeichnet, daß das Federorgan eine gekrümmte Blattfeder (19) mit zwei Schenkeln (20, 21) ist und daß der eine Schenkel (20) von der Rückseite des Leuchtengehäuses (16) absteht und der andere Schenkel (21) sich an der Innenseite (36) der Karosserie (11) abstützt.

3. Einheit nach Anspruch 1 oder 2, deren Leuchtenreflektor und Leuchtengehäuse einstückig ausgebildet sind, dadurch gekennzeichnet, daß der seitlichen Außenabschnitt der Leuchte als Lappen (18) ausgebildet ist, der sich am Leuchtenreflektor (17) fortsetzt.

4. Einheit nach Anspruch 3, dadurch gekennzeichnet, daß zwischen dem Lappen (18) und dem sich an der Innenseite (36) der Karosserie (11) abstützenden Schenkel (21) der Blattfeder (19) ein Dichtstück (34) eingefügt ist.

5. Einheit nach Anspruch 4, dadurch gekennzeichnet, daß das Dichtstück (34) auf einer Kante (35) der Karosserie (11) aufgesteckt ist.

6. Einheit nach einem der vorgenannten Ansprüche, dadurch gekennzeichnet, daß die Elemente für die Befestigung des Leuchtengehäuses (16) an dem Scheinwerfergehäuse (12) zum einen ein vom Leuchtengehäuse (16) abstehender, horizontal wirkender Federarm (24) sind, der beim Zusammenwirken mit einer Schulter (28) des Scheinwerfergehäuses (12) die seitliche Zuordnung beider Gehäuse (12, 16) bewirkt, und zum andern ein vom Leuchtengehäuse (16) abstehender, vertikal wirkender Federhaken (26), der beim Hintergreifen einer Kante (33) des Scheinwerfergehäuses (12) die Zuordnung beider Gehäuse (12, 16) in Fahrtrichtung (25) bewirkt.

7. Einheit nach Anspruch 6, dadurch gekennzeichnet, daß das Leuchtengehäuse (16) zwei Federarme (24) aufweist, daß das Scheinwerfergehäuse (12) zwei Taschen (27) hat und daß jede Tasche (27) die mit dem Federarm (24) zusammenwirkende Schulter (28) aufweist und eine Gleitfläche (29) für den Federarm (24) hat für die vertikale Zuordnung beider Gehäuse (12, 16).

8. Einheit nach Anspruch 7, dadurch gekennzeichnet, daß das Leuchtengehäuse (12) zwei Federhaken (26) aufweist und daß das Scheinwerfergehäuse (12) eine erste und zweite Kante (35) hat, welche jeweils die Stützfläche (31) des Federhakens (26) hintergreift.

9. Einheit nach Anspruch 8, dadurch gekennzeichnet, daß die die Kante (35) hintergreifende Stützfläche (31) des Federhakens (26) in horizontaler Richtung ballig ausgebildet ist.

## Revendications

1. Ensemble phare-clignotant pour voitures automobiles particulières comportant un boîtier de phare, disposé dans une cavité de la carrosserie du véhicule automobile et fixé à celle-ci, et avec un boîtier d'éclairage insérable sur le boîtier de phare, parallèlement à l'axe longitudinal du véhicule, et fixé au boîtier de phare, à l'aide d'éléments, dans sa position de fonctionnement, caractérisé en ce que le boîtier d'éclairage (16) présente au moins un organe élastique (19) sur la face opposée au phare et le boîtier d'éclairage présente en face de l'organe élastique une partie extérieure latérale (18) entre laquelle et l'organe élastique peut être fixée une bordure (33) de la carrosserie du véhicule.

2. Ensemble selon la revendication 1, dont le boîtier d'éclairage est composé de matière plastique, caractérisé en ce que l'organe élastique est un ressort à lame courbe (19) à deux branches (20, 21) et en ce qu'une branche (20) s'écarte de la face arrière du boîtier d'éclairage (16) et que l'autre branche (21) s'appuie sur la face intérieure (36) de la carrosserie.

3. Ensemble selon la revendication 1 ou 2, dont le réflecteur de lumière et le boîtier d'éclairage sont réalisés d'une seule pièce, caractérisé en ce que la partie extérieure latérale des éclairages est réalisée sous la forme de languettes (18) se prolongeant sur le réflecteur d'éclairage (17).

4. Ensemble selon la revendication 3, caractérisé en ce qu'une pièce d'étanchéité (34) est introduite entre la languette (18) et la branche (21) du ressort à lame (19) qui s'appuie sur la face intérieure (36) de la carrosserie (11).

5. Ensemble selon la revendication 4, caractérisé en ce que la pièce d'étanchéité (34) est enfichée sur une bordure (35) de la carrosserie (11).

6. Ensemble selon l'une des revendications précédentes, caractérisé en ce que les éléments de fixation du boîtier d'éclairage (16) sur le boîtier de phare (12) sont, d'une part un bras élastique (24), s'écartant du boîtier d'éclairage (16), agissant horizontalement, qui provoque, lors de la coopération avec un épaulement (28) du boîtier de phare (12), l'association latérale des deux boîtiers (12, 16), et d'autre part un crochet élastique (26), s'écartant du boîtier d'éclairage (16), agissant verticalement, qui provoque, lors de la prise arrière d'une bordure (33) du boîtier de phare (12), l'association des deux boîtiers (12, 16) dans la direction de l'avancement (25).

7. Ensemble selon la revendication 6, caractérisé en ce que le boîtier d'éclairage (16) présente deux bras élastiques (24), en ce que le boîtier de phare (12) comporte deux poches (27) et en ce que chaque poche (27) présente l'épaulement (28) coopérant avec le bras élastique (24) et comporte une surface de glissement (29) destinée au bras élastique (24), pour l'association verticale des deux boîtiers (12, 16).

8. Ensemble selon la revendication 7, caractérisé en ce que le boîtier d'éclairage (12) présente deux crochets élastiques (26) et en ce que le boîtier de phare (12) présente une première et une deuxième bordure (35) venant chaque fois en prise à l'arrière de la surface d'appui (31) du crochet élastique (26).

9. Ensemble selon la revendication 8, caractérisé en ce que la surface d'appui (31) du crochet élastique (26) venant en prise à l'arrière de la bordure (35) est bombée en direction horizontale.

**Claims**

1. Headlight-direction indicator unit for passenger motor vehicles having a headlight housing which is arranged in a recess of the motor vehicle body and secured to the latter, and having a light housing which can be inserted into the headlight housing in parallel to the motor vehicle longitudinal axis and is secured to the headlight housing by means of elements in its functional position, characterized in that the light housing (16) has at least one spring member (19) on the side facing away from the headlight and the light housing has a lateral outer section (18) facing the spring member, between which outer section and the spring member a flange (33) of the motor vehicle body can be clamped.

2. Unit according to Claim 1, the light housing of which consists of plastic, characterized in that the spring member is a bent leaf spring (19) having two legs (20, 21) and in that the one leg (20) projects from the rear of the light housing (16) and the other leg (21) is braced against the inner side (36) of the vehicle body (11).

3. Unit according to Claim 1 or 2, the light reflector and light housing of which are constructed as one piece, characterized in that the lateral outer section of the light is constructed as a tab (18) which is continuous with the light reflector (17).

4. Unit according to Claim 3, characterized in that, between the tab (18) and the leg (21), which is braced against the inner side (36) of the vehicle body (11), of the leaf spring (19) a sealing piece (34) is inserted.

5. Unit according to Claim 4, characterized in that the sealing piece (34) is mounted on one edge (35) of the vehicle body (11).

6. Unit according to one of the previous claims, characterized in that the elements for securing the light housing (16) to the headlight housing (12) are, on the one hand, a horizontally acting spring arm (24) projecting from the light housing (16) which spring arm (24), on cooperating with a shoulder (28) of the headlight housing (12), brings about the lateral alignment of both housings (12, 16), and, on the other hand, a vertically acting spring hook (26) projecting from the light housing (16) which spring hook (26), on engaging behind an edge (33) of the headlight housing (12), brings about the alignment of both housings (12, 16) in the travel direction (25).

7. Unit according to Claim 6, characterized in that the light housing (16) has two spring arms (24), in that the headlight housing (12) has two pockets (27) and in that each pocket (27) has the shoulder (28) cooperating with the spring arm (24) and has a sliding surface (29) for the spring arm (24) for the vertical alignment of both housings (12, 16).

8. Unit according to Claim 7, characterized in that the light housing (12) has two spring hooks (26) and in that the headlight housing (12) has a first and second edge (35), behind which, in each case, the support surface (31) of the spring hook (26) engages.

9. Unit according to Claim 8, characterized in that the support surface (31) which engages behind the edge (35), of the spring hook (26) is constructed to be cambered in the horizontal direction.

FIG. 1

FIG.2

FIG.3